# EUROPEAN PATENT SPECIFICATION

(11) **EP 2 854 466 B1**
(45) Date of publication and mention of the grant of the patent: **07.09.2016**
(21) Application number: 13306323.0
(22) Date of filing: 26.09.2013
(51) Int. Cl.: H04W 72/04

(54) **Communication Technique**
Kommunikationstechnik
Technique de communication

(43) Date of publication of application: 01.04.2015
(73) Proprietor: ALCATEL LUCENT, 92100 Boulogne-Billancourt (FR)
(72) Inventor: Brend, Graham, Swindon, Wiltshire SN5 7DJ (GB); Puddle, Nicola, Swindon, Wiltshire SN5 7DJ (GB); Wong, Shin Horng, Swindon, Wiltshire SN5 7DJ (GB)
(74) Representative: Berthier, Karine

(56) References cited:
- US-A1- 2003 073 455
- US-A1- 2006 286 996
- US-A1- 2011 223 900
- NOKIA SIEMENS NETWORKS: "Introducing E-DCH decoupling in Hetnet deployments", 3GPP DRAFT; R1-132529_INTRODUCING_E-DCH_DECOUPLING_IN_ HETNET_DEPLOYMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. Fukuoka, Japan; 20130520 - 20130524 11 May 2013 (2013-05-11), XP050698247, Retrieved from the Internet: URL:http://www.3gpp.org/ftp/tsg_ran/WG1_RL 1/TSGR1_73/Docs/ [retrieved on 2013-05-11]
- ZTE: 'Considerations for E-DCH Decoupling in UMTS HetNets' 3GPP R1-133539, [Online] vol. RAN WG1, 09 August 2013, BARCELONA, SPAIN, page 5PP, XP050716100 Retrieved from the Internet: <URL:http://www.3gpp.org/ftp/tsg_ran/WG1_RL 1/TSGR1_74/Docs/> [retrieved on 2013-08-09]

## Description

### FIELD OF THE INVENTION

Aspects and embodiments described provide a wireless telecommunications network user equipment method, a wireless telecommunications network control node method, user equipment, network control node and computer program product operable to perform those methods.

### BACKGROUND

Wireless telecommunication networks are known. In such networks, network connectible devices (for example, mobile telephones) are operable to communicate with base stations provided by network operators. In known wireless telecommunication networks, radio coverage is provided to network connectible devices such as mobile telephones and wireless devices such as tablets in geographical areas typically known as cells. A base station is located in each cell to provide radio coverage. Network connectible devices in each cell are operable to receive information and data from the base station and to transmit information and data to that base station.

Network connectible devices roam through a wireless communications network. Base stations are provided which support areas of radio coverage as described above. A number of those base stations are provided and are distributed geographically in order to provide a wide area of coverage to network connectible devices.

When network connectible devices such as user equipment are within an area served by a base station, communications may be established between user equipment and a base station using associated radio links. Traditional base stations provide coverage in relatively large geographical areas and such base stations are often referred to as macro base stations and support macro cells of radio coverage. It is possible to provide a heterogeneous network (HetNet) where smaller sized cells are provided within macro cells. Such smaller sized cells can be referred to as micro cells, pico cells or femto cells. One way to establish a small cell is to provide a small cell base station or low power node (LPN) which is operable to provide radio coverage having a relatively limited range within the coverage area of the macro cell. The transmission power of a low power node is relatively low and each low power node tends to support small cells which provide small coverage areas compared to that of a macro cell.

Small radio cells of coverage are typically provided where communications coverage provided by a macro cell is poor, where a user wishes to use an alternative communications link provided locally, and/or to increase capacity within a network.

Deployment of small cells in a wireless communication network can assist a network operator in relation to handling capacity in high traffic areas; for example, so-called hot spot areas. An ability to offload traffic to a small cell or cells located in a high traffic area of a network may be particularly useful to a network operator.

Although HetNet deployments may offer advantages, unexpected consequences of such deployments may occur. It is desired to address those consequences.

US2011/0223900 discloses a wireless network that provides for transmissions between a network and user equipment in a first direction using a serving node and in a second direction using a supplemental node. The supplemental node is selected based on providing better channel conditions between the network and the user equipment in the second direction than the serving node does. Where the serving cell receives a weak uplink signal, the serving node may select an uplink supplemental node to help with the uplink transmission. The user equipment then measures the downlink signal power from nodes that may be considered as uplink supplemental nodes and transmits a measurement report for these nodes after a predetermined time or when the signal power from a node crosses a threshold. The serving cell determines coupling losses from the results and known transmission powers of the nodes and sends requests to them to see if they can serve as supplemental nodes. When a preferred set of nodes is determined, the details can be sent to the user equipment. An uplink scheduling grant is then sent to the user equipment which transmits an uplink signal.

Nokia Siemens Networks "Introducing E-DCH decoupling in Hetnet deployments" document for discussion at 3GPP TSG-RAN WG1 Meeting #73 Japan, 20 - 24 May 2013 discusses the idea of E-DCH decoupling in order to reduce the effect of DL/UL mismatch, whereby a low power node can provide a maximum permissible grant value, the grants being provided by LPNs directly to the UE or via the macro. The RNC adds LPN to the active set of the UE in the radio link set up procedures and then a serving grant message initiates the procedure.

### SUMMARY

According to a first aspect, there is provided a wireless telecommunications network user equipment method, comprising: determining a radio condition trigger indicative of an uplink-downlink decoupling opportunity; transmitting a decoupling opportunity notification if said radio condition trigger is met at user equipment; receiving decoupling preparation information relating to said uplink-downlink decoupling opportunity, said decoupling preparation information comprising an indication of said implementation trigger to be applied by said user equipment; and awaiting receipt of an implementation trigger to implement said uplink downlink decoupling.

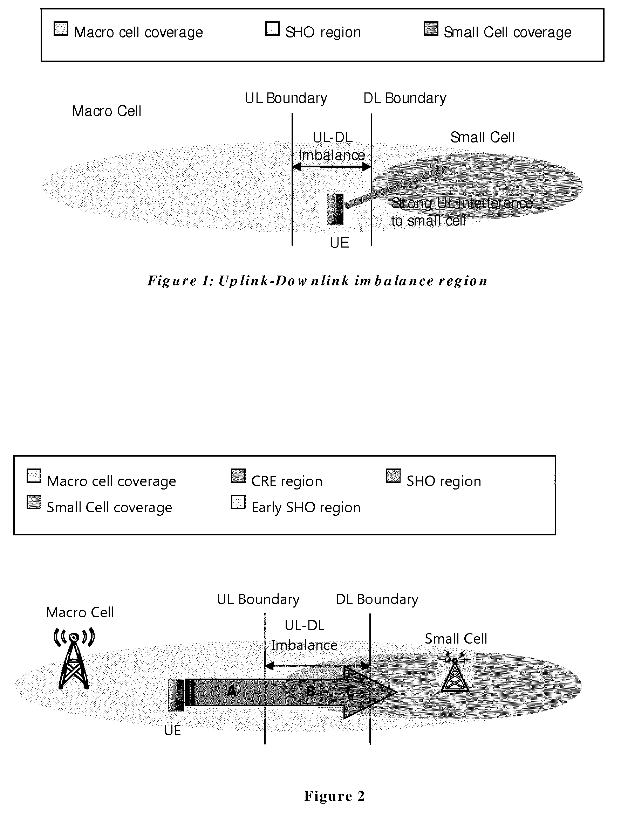

The first aspect recognises that in a HetNet deployment, such as that illustrated in Figure 1 which shows a macro cell and a small cell, an uplink (UL) boundary occurs where user equipment uplink path loss to the macro base station and the small cell base station is substantially the same. A downlink (DL) boundary occurs where the received pilot power from the macro base station and the received pilot power from the small cell base station are substantially identical at user equipment. In a homogeneous network (ie, a macro cell only deployment or small cell only deployment) the uplink and downlink boundaries tend to be substantially coincident and occur at the same geographical location within the network. However, in a HetNet deployment a small cell base station typically has a lower transmit power than a macro cell base station. As a consequence the uplink and downlink boundaries tend to differ as shown in Figure 1. The region between the uplink and downlink boundary is referred to as the uplink-downlink imbalance region. If user equipment is served by the macro cell base station and enters the uplink-downlink imbalance region as shown in Figure 1, that user equipment will typically create strong interference within the small cell supported by the small cell base station. Such a scenario is applicable to both LTE and UMTS radio access technologies. In UMTS, the strong uplink interference will occur unless the user equipment is operating in a soft handover mode within a soft handover region. Such a region (SHO region) is shown schematically in Figure 1.

Given the difference in uplink and downlink boundaries, it is recognised that uplink and downlink communication for user equipment operating in the imbalance region may be decoupled. According to such decoupling, the uplink and downlink streams can be served by different cells. In the example shown in Figure 1, the downlink is served by the serving macro cell base station, whilst the uplink is served by the small cell base station. As a result, instead of generating strong interference to the small cell, the small cell base station is operable to demodulate the uplink signal for this user equipment.

Uplink-downlink decoupling is also introduced in LTE machine-type communication (MTC) user equipment coverage extension scenarios, to limit the amount of uplink coverage extension required from a network by decoupling the user equipment uplink transmission to a small cell which may have a more favourable uplink path loss than that of a macro cell.

The first aspect recognises that fast activation or deactivation of uplink-downlink decoupling may be useful. In particular, a layer 1 message such as an HS-SCCH order can be used to trigger entry or exit from a partial handover such as that envisaged in an uplink-downlink decoupling scenario. Ensuring that fast activation or deactivation of the decoupling can occur may minimise the time in which a user may generate significant interference or experience interference from the network. Furthermore, using a fast message to activate uplink and downlink decoupling can allow the network to choose a most appropriate time or appropriate network conditions in which to activate or deactivate uplink and downlink decoupling.

Whilst fast activation and deactivation of uplink-downlink decoupling can be achieved using a layer 1 message (for example, an HS-SCCH order), such a message may only be able to provide limited information to user equipment. The first aspect recognises that user equipment may need to be preconfigured appropriately in order to prepare it to operate in an uplink-downlink decoupling mode. It will be appreciated that such preconfiguration may be necessary in relation to various combinations of small cell base stations and macro cell base stations. It could be expected that a macro cell in a HetNet deployment could have a large number of small cell base stations within its coverage area and, thus, configuration of all possible combinations of small cell and macro cell pairings on initial connection of user equipment to a network may be inefficient.

Aspects recognise that it is necessary to address how to provide decoupling configuration information to user equipment in an efficient manner so that it can be activated and deactivated using a fast order.

The decoupling préparation information comprises an indication of said implementation trigger to be applied by the user equipment. Accordingly, the user may be offered some guidance or instruction regarding a method in which uplink-downlink decoupling may be activated. There maybe some instruction regarding the monitoring of radio condition for a subsequent set of trigger criteria; there maybe an instruction to await a layer one message, for example, an HS-SCCH message from a serving, or non-serving cell, or a specific instruction to await an appropriate RRC preconfiguration message before activating uplink-downlink decoupling techniques.

In one embodiment, the radio condition trigger comprises: an indication of a threshold received pilot signal from one or more cells in the wireless telecommunications network. According to some embodiments, a "decoupling opportunity" event may comprise a set of criteria which recognise that user equipment is entering a region which could be a candidate for implementation of uplink-downlink decoupling or recoupling. The criteria may relate to radio conditions being experienced by user equipment within a network. According to some embodiments, a decoupling opportunity may comprise a set of criteria similar to those recognised as existing trigger events; for example, an event 1a. In particular, a decoupling opportunity event may comprise a set of criteria which represent "early" event 1a, thereby indicating that a primary CPICH has entered the reporting range. It will be appreciated that such an implementation can be put into action by setting parameters in an RRC measurement control message sent to user equipment by the network to allow for an event trigger earlier than would be normal for a 1a event in a conventional soft handover region. Such an early trigger would be recognised as a "decoupling opportunity" and the meeting by user equipment of those radio condition criteria can be used to notify a network of a possible uplink-downlink decoupling opportunity. If such criteria were met by user equipment and a trigger message was sent, an RNC may be operable to send an appropriate RRC message, for example, a reconfiguration message, to that user equipment reporting the trigger. That reconfiguration message may include necessary preparation information for a subsequent decoupling event.

In one embodiment, the decoupling preparation information comprises: uplink and downlink communication configuration information for at least one cell identified as a candidate for uplink-downlink decoupling. Decoupling preconfiguration messaging from an RNC to user equipment may provide a range of appropriate information. In some embodiments, preconfiguration information is provided for at least one pair of cells in an active set of cells associated with said user equipment. In some embodiments, a plurality of sets of preconfiguration information arc provided to user equipment, each relating to a possible uplink-downlink decoupling candidate pair of cells. In some embodiments, preconfigured decoupling information is provided to the user equipment in relation to cells which are not in a current user equipment active set.

In one embodiment, the implementation trigger comprises an explicit message to commence uplink-downlink decoupling. In one embodiment, the message is received from a cell serving the user equipment. In one embodiment, the message is received from a user equipment non-serving cell. It will be appreciated that the quicker uplink-downlink decoupling can be activated at user equipment, the better, particularly in terms of eliminating interference faced by cells within a network. Accordingly, the implementation trigger may comprise a layer one message, for example, an HS-SCCH order, to activate that uplink-downlink decoupling procedure. Such an order may be transmitted by the serving cell, or a non-serving cell as appropriate. A non-serving cell maybe able to trigger activation of uplink-downlink decoupling by virtue of the user equipment already being in possession of preconfiguration information in relation to such a cell. User equipment may be configured to understand that receipt of such a message from a non-serving cell implies that cell should now act as an uplink or downlink serving cell.

In one embodiment, the implementation trigger comprises: an indication of a serving cell to be used for each of uplink and downlink communication. Accordingly, if user equipment has been preconfigured to perform uplink-downlink decoupling in relation to a plurality of cell pairings, an implementation trigger message may offer user equipment information regarding which cells to actually use for uplink-downlink decoupled communication. In some embodiments, it is possible that the order which activates decoupling, for example a decoupling HS-SCCH order, could provide appropriate combination information to user equipment. Accordingly, if the activation order instructs user equipment to decouple such that downlink is supported by cell A and uplink is supported by cell B, the user equipment may use appropriate stored information for cell A and cell B. The preconfigured decoupling could remain stored by the user equipment until or in case a network control node, for example, an RNC, instructs user equipment to deactivate decoupling. That deactivation may occur by means of a reconfiguration message.

In one embodiments, the implementation trigger comprises: an instruction to cache an existing uplink and downlink communication configuration. The user equipment may, according to some embodiments, store current information relating to its serving cell in relation to the cell to which it is currently attached. That serving HS-DSCH and/or E-DCH cell information may be already stored at the user equipment and need not necessarily be provided by the network. Accordingly, if a network determines that it is appropriate to recouple the uplink and downlink streams to the serving cell, user equipment may be operable to recall appropriate saved configuration information. Such an arrangement effectively operates to reverse decoupling to a previous state. That reversal may occur by use of an appropriate layer 1 order, for example an HS-SCCH message, on appropriate instruction from a network.

In one embodiments, the method comprises: clearing the decoupling preparation information relating to the uplink-downlink decoupling opportunity if a radio reconfiguration message is received. According to a further embodiment, an RNC may be operable to update preparation information sent to user equipment and remove a previously sent decoupling configuration by sending an appropriate radio reconfiguration message to the relevant user equipment.

A second aspect provides a computer program product operable, when executed on a computer, to perform the method of the first aspect.

A third aspect provides wireless telecommunications network user equipment, comprising: determination logic operable to determining a radio condition trigger indicative of an uplink-downlink decoupling opportunity; transmission logic operable to transmit a decoupling opportunity notification if said radio condition trigger is met at user equipment; reception logic operable to receive decoupling preparation information relating to said uplink-downlink decoupling opportunity, said decoupling preparation information comprising an indication of said implementation trigger to be applied by said user equipment; and implementation logic operable to await receipt of an implementation trigger and implement said uplink downlink decoupling.

In one embodiment, the radio condition trigger comprises: an indication of a threshold received pilot signal from one or more cells in the wireless telecommunications network.

In one embodiment, the decoupling preparation information comprises: uplink and downlink communication configuration information for at least one cell identified as a candidate for uplink-downlink decoupling.

In one embodiment, the decoupling preparation information comprises: an indication of said implementation trigger to be applied by the user equipment.

In one embodiment, the implementation trigger comprises an explicit message to commence uplink-downlink decoupling.

In one embodiment, the message is received from a cell serving the user equipment.

In one embodiment, the message is received from a user equipment non-serving cell.

In one embodiment, the implementation trigger comprises: an indication of a serving cell to be used for each of uplink and downlink communication.

In one embodiment, the implementation trigger comprises: an instruction to cache an existing uplink and downlink communication configuration.

In one embodiment, the implementation logic is operable to clear the decoupling preparation information relating to the uplink-downlink decoupling opportunity if a radio reconfiguration message is received.

A fourth aspect provides a wireless telecommunications network control node method, comprising: determining a radio condition trigger indicative of an uplink-downlink decoupling opportunity; receiving a decoupling opportunity notification if said radio condition trigger is met at user equipment; transmitting decoupling preparation information relating to said uplink-downlink decoupling opportunity, said decoupling preparation information comprising an indication of said implementation trigger to be applied by said user equipment; and instructing sending of an implementation trigger to implement said uplink downlink decoupling if it is determined decoupling network criteria are met.

A fifth aspect provides a computer program product operable, when executed on a computer, to perform the method of the fourth aspect.

A sixth aspect provides a wireless telecommunications network control node, comprising: determination logic operable to determine a radio condition trigger indicative of an uplink-downlink decoupling opportunity; reception logic operable to receive a decoupling opportunity notification if said radio condition trigger is met at user equipment; transmission logic operable to transmit decoupling preparation information relating to said uplink-downlink decoupling opportunity, said decoupling preparation information comprising an indication of said implementation trigger to be applied by said user equipment; and instruction logic operable to instruct sending of an implementation trigger to implement said uplink downlink decoupling if it is determined decoupling network criteria are met.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates user equipment in an uplink-downlink imbalance region of a HetNet;
Figure 2 illustrates schematically user equipment moving through a HetNet deployment having an uplink-downlink imbalance region;
Figure 3 is a signalling diagram illustrating a method in accordance with one embodiment; and
Figure 4 illustrates schematically pre-configuration decoupling information according to one embodiment.

### DESCRIPTION OF THE EMBODIMENTS

### Overview

Before discussing the embodiments in any more detail, first an overview will be provided. Existing techniques do not exist for preparing user equipment with decoupling or recoupling information such that when user equipment receives a fast order to implement that mechanism, appropriate action can be taken. Existing techniques in similar scenarios relate to an enhanced serving cell change procedure. However, such pre-configuration information is provided in relation to a full handover of all services for user equipment and the triggers and information required differ significantly to the information that would be required by user equipment in order to perform decoupling or recoupling. In particular, decoupling can be viewed as a partial, rather than full, handover. It will be appreciated that for uplink-downlink decoupling to occur, appropriate information needs to be provided to user equipment, enabling the user equipment and associated cells to de-link serving cell uplink and downlink.

Aspects and embodiments introduce a method according to which uplink-downlink decoupling information can be provided to user equipment. That information can be subsequently utilised by the user equipment upon reception of an uplink-downlink decoupling indicator; for example, a specific activation message requesting that the user equipment couple or decouple. That activation message may, for example, comprise a layer 1 message such as an HS-SCCH order transmitted to the user equipment from the macro cell or from a small cell. According to aspects and embodiments described, preparation of uplink-downlink decoupling information and pre-configuration of user equipment can be triggered when it is detected that a "decoupling opportunity" event occurs.

According to some embodiments, a "decoupling opportunity" event may comprise a set of criteria which recognise that user equipment is entering a region which could be a candidate for implementation of uplink-downlink decoupling or recoupling. The criteria may relate to radio conditions being experienced by user equipment within a network. According to some embodiments, a decoupling opportunity may comprise a set of criteria similar to those recognised as existing trigger events; for example, an event 1a. In particular, a decoupling opportunity event may comprise a set of criteria which represent "early" event 1a, thereby indicating that a primary CPICH has entered the reporting range. It will be appreciated that such an implementation can be put into action by setting parameters in an RRC measurement control message sent to user equipment by the network to allow for an event trigger earlier than would be normal for a 1a event in a conventional soft handover region. Such an early trigger would be recognised as a "decoupling opportunity" and the meeting by user equipment of those radio condition criteria can be used to notify a network of a possible uplink-downlink decoupling opportunity.

If such criteria were met by user equipment and a trigger message was sent, a network control node, for example, an RNC, may be operable to send an appropriate RRC message, for example, a reconfiguration message, to that user equipment reporting the trigger. That reconfiguration message may include necessary preparation information for a subsequent decoupling event.

It will be appreciated that at the point that user equipment recognises that radio condition criteria indicative of a decoupling opportunity are met there is no need for a small cell to be within the active set of that user equipment.

Such a procedure differs from an enhanced serving cell change procedure, in that preconfiguration information relating to an enhanced serving cell change is only triggered by reception of an event 1a measurement report and the network operates to send that pre-configuration information to the user equipment in the RRC active set update message; that is to say, the information which enables user equipment to preconfigure itself for an enhanced serving cell change is transferred to the user equipment when the target cell is added in to the user equipment's active set. According to aspects and embodiments described herein, an early 1a event may not actually result in an active set update.

According to some aspects and embodiments, if the user equipment has received appropriate uplink-downlink decoupling preparation data the user equipment will be able to act upon receipt of an appropriate activation trigger, for example an HS-SCCH order received from the serving cell, and implement appropriate uplink-downlink coupling or decoupling as appropriate.

It will be appreciated that as well as supporting uplink-downlink decoupling, user equipment, according to aspects and embodiments, may also support an uplink-downlink recoupling procedure according to which decoupled uplink and downlink streams are recoupled together and reunited at a single node. Accordingly, further aspects and embodiments allow for appropriate preparation information to be sent to user equipment to recouple uplink and downlink streams to a single cell. That preparation information may be stored by user equipment. Accordingly, if a network determines that it is appropriate to recouple the uplink and downlink streams to the serving cell, user equipment may be operable to recall appropriate saved configuration information. Such an arrangement effectively operates to reverse decoupling to a previous state. That reversal may occur by use of an appropriate layer 1 order, for example an HS-SCCH message, on appropriate instruction from a network.

According to further embodiments, user equipment may be configured with one or more sets of uplink-downlink decoupling preparation information. Such an arrangement may be required in a mass cell deployment scenario in which there may be more than one possible small cell supported by a low power node which could be used for decoupling.

According to a further embodiment, an network control node, for example, an RNC, may be operable to update preparation information sent to user equipment and remove a previously sent decoupling configuration by sending an appropriate radio reconfiguration message to the relevant user equipment.

Figure 2 illustrates schematically a HetNet deployment in a UMTS network. As shown in Figure 2, a user equipment (UE) moves from a region of macro cell coverage towards a region of small cell coverage through an uplink-downlink imbalance region. As part of that movement, user equipment passes through points A, B and C. At point A, an "early" event 1a is triggered. That event has a set of criteria which typically occur prior to the trigger point associated with user equipment entering a conventional soft handover region. At point B, the small cell base station may be operable to inform an RNC that it is able to decode the user equipment uplink signal. Between points B and C, uplink-downlink decoupling may be activated. As the user equipment moves towards point C, it would normally trigger a handover to the small cell base station. That handover would typically be triggered by the user equipment sending an event 1d notification to the RNC. At such a point, the user equipment would typically be in the cell range extension (CRE) region of the small cell base station and it would typically face strong interference from the macro cell. From an interference point of view, it can make sense for user equipment to maintain, or activate, uplink-downlink decoupling if the downlink continues to be controlled by the macro cell whilst the uplink is received by the small cell. It will be appreciated that the quicker uplink-downlink decoupling can be activated at user equipment, the better, particularly in terms of eliminating interference faced from the macro cell.

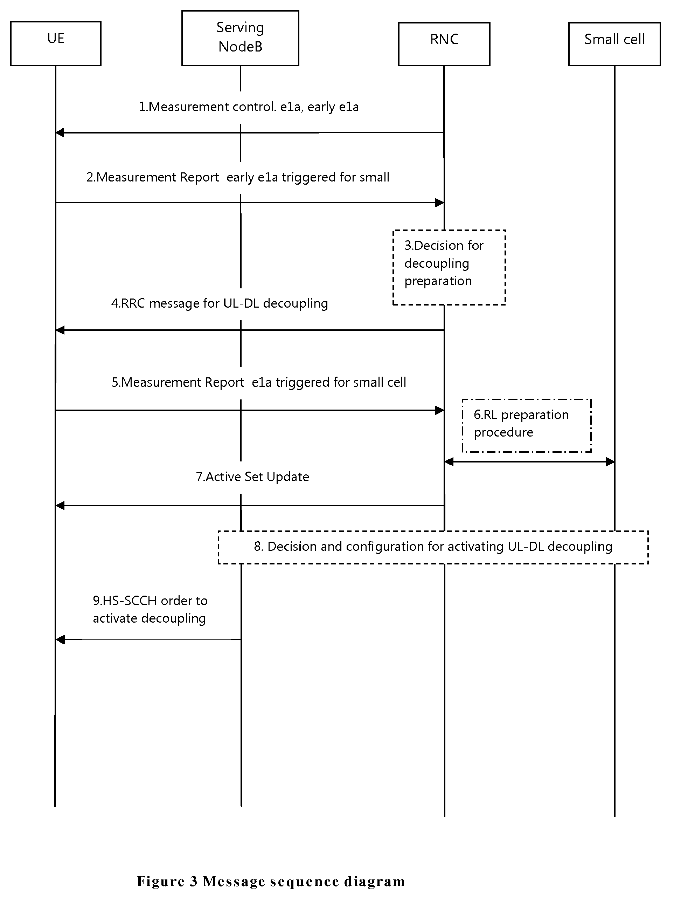

Figure 3 is a signalling diagram illustrating schematically method steps in accordance with one possible embodiment.
1. At step 1, the RNC is operable to configure user equipment for a decoupling opportunity event. That is to say, the RNC configures user equipment to report an early E1a, together with any further conventional triggers; for example, a known 1a trigger event.
2. At step 2, the user equipment triggers a measurement report for an early E1a.
3. At step 3, the network is operable to make a decision to prepare the user equipment for potential subsequent uplink-downlink decoupling.
4. The RNC is operable to send an RRC message to the user equipment including configuration information for that uplink-downlink decoupling. At this point the user equipment then listens for a subsequent HS-SCCH order to activate that uplink-downlink decoupling procedure. Such an order may be transmitted by the serving cell.
5. At step 5, user equipment may be operable to trigger a conventional event 1a.
6. At step 6 a known procedure for radio link set-up to a small cell occurs.
7. At step 7 an RNC sends an activate set update to the user equipment to add the small cell into the user equipment active set.
8. At step 8 a decision is made regarding initiation of uplink-downlink decoupling.
9. The serving base station is operable to send an HS-SCCH order to the user equipment allowing the user equipment to quickly decouple uplink transmission and subsequent uplink transmissions occur to the small cell.

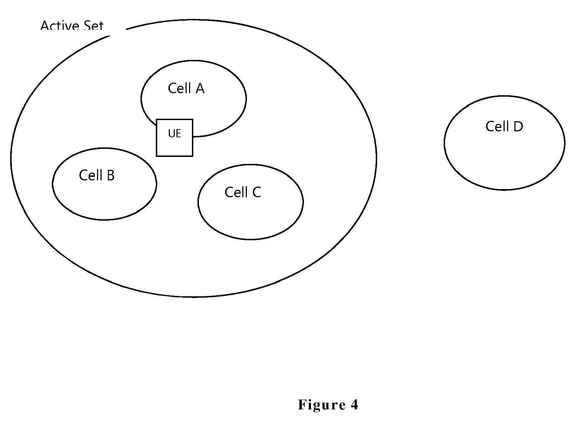

Figure 4 illustrates schematically possible preconfiguration decoupling information. In particular, Figure 4 illustrates schematically an instance in which user equipment has cells A, B and C in its current active set. Cell D as illustrated in Figure 4 may not be in the active set of the user equipment. Decoupling preconfiguration messaging from an RNC to user equipment may provide a range of appropriate information. In particular, decoupling information provided may include: cell B serving HS-DSCH cell information; cell B serving E-DCH cell information; cell C serving HS-DSCH cell information; cell C serving E-DCH cell information; cell D serving HS-DSCH cell information; and cell D serving E-DCH cell information. It would, of course, be possible to preconfigure decoupling information to the user equipment for cells which are not in the active set; that is to say, decoupling information may be provided in relation to cell D which is not included in the user equipment's current active set. The user equipment may, according to some embodiments, store current information relating to its serving cell in relation to the cell to which it is currently attached. That serving HS-DSCH and/or E-DCH cell information may be already stored at the user equipment and need not necessarily be provided by the network.

In some embodiments, it is possible that the order which activates decoupling, for example a decoupling HS-SCCH order, could provide appropriate combination information to user equipment. Accordingly, if the activation order instructs user equipment to decouple such that downlink is supported by cell A and uplink is supported by cell B, the user equipment may use appropriate stored information for cell A and cell B. The preconfigured decoupling could remain stored by the user equipment until or in case an RNC or other appropriate network control node instructs user equipment to deactivate decoupling. That deactivation may occur by means of a reconfiguration message.

It can be seen that preconfigured decoupling information provided may provide a flexible means for a network to select a decoupling combination on issuance of an appropriate order. A network may be operable to delay a decision regarding when exactly to initiate decoupling and in relation to which cell combination to select until an appropriate point, thus providing maximum flexibility.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its scope as set out in the appended claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

## Claims

1. A wireless telecommunications network user equipment method, comprising:
determining a radio condition trigger indicative of an uplink-downlink decoupling opportunity;
transmitting a decoupling opportunity notification if said radio condition trigger is met at user equipment;
receiving decoupling preparation information relating to said uplink-downlink decoupling opportunity, said decoupling preparation information comprising an indication of an implementation trigger to be applied by said user equipment; and
awaiting receipt of said implementation trigger to implement said uplink downlink decoupling.

2. A method according to claim 1, wherein said radio condition trigger comprises:
an indication of a threshold received pilot signal from one or more cells in said wireless telecommunications network.

3. A method according to claim 1 or claim 2, wherein said decoupling preparation information comprises: uplink and downlink communication configuration information for at least one cell identified as a candidate for uplink-downlink decoupling.

4. A method according to any preceding claim, wherein said implementation trigger comprises an explicit message to commence uplink-downlink decoupling.

5. A method according to claim 4, wherein said message is received from a cell serving said user equipment.

6. A method according to claim 4, wherein said message is received from a user equipment non-serving cell.

7. A method according to any preceding claim, wherein said implementation trigger comprises: an indication of a serving cell to be used for each of uplink and downlink communication.

8. A method according to any preceding claim, wherein said implementation trigger comprises: an instruction to cache an existing uplink and downlink communication configuration.

9. A method according to any preceding claim, comprising: clearing said decoupling preparation information relating to said uplink-downlink decoupling opportunity if a radio reconfiguration message is received.

10. A computer program product operable, when executed on a computer, to perform the method of any one of claims 1 to 9.

11. Wireless telecommunications network user equipment, comprising:
determination logic operable to determining a radio condition trigger indicative of an uplink-downlink decoupling opportunity;
transmission logic operable to transmit a decoupling opportunity notification if said radio condition trigger is met at user equipment;
reception logic operable to receive decoupling preparation information relating to said uplink-downlink decoupling opportunity, said decoupling preparation information comprising an indication of an implementation trigger to be applied by said user equipment; and
implementation logic operable to await receipt of said implementation trigger and implement said uplink downlink decoupling.

12. A wireless telecommunications network control node method, comprising:
determining a radio condition trigger indicative of an uplink-downlink decoupling opportunity;
receiving a decoupling opportunity notification if said radio condition trigger is met at user equipment;
transmitting decoupling preparation information relating to said uplink-downlink decoupling opportunity, said decoupling preparation information comprising an indication of an implementation trigger to be applied by said user equipment; and
instructing sending of said implementation trigger to implement said uplink downlink decoupling if it is determined decoupling network criteria are met.

13. A computer program product operable, when executed on a computer, to perform the method of claim 12.

14. A wireless telecommunications network control node, comprising:
determination logic operable to determine a radio condition trigger indicative of an uplink-downlink decoupling opportunity;
reception logic operable to receive a decoupling opportunity notification if said radio condition trigger is met at user equipment;
transmission logic operable to transmit decoupling preparation information relating to said uplink-downlink decoupling opportunity, said decoupling preparation information comprising an indication of an implementation trigger to be applied by said user equipment; and
instruction logic operable to instruct sending of said implementation trigger to implement said uplink downlink decoupling if it is determined decoupling network criteria are met.

## Patentansprüche

1. Verfahren für ein Benutzergerät für ein drahtloses Telekommunikationsnetzwerk, umfassend:
Bestimmen eines Funkbedingungstriggers, der eine Aufwärts-/Abwärtsentkopplungsmöglichkeit anzeigt;
Übertragen einer Entkopplungsmöglichkeitsbenachrichtigung, sofern der besagte Funkbedingungstrigger am Benutzergerät erfüllt ist;
Empfangen von Entkopplungsvorbereitungsinformationen in Bezug auf die besagte Aufwärts-/Abwärtsentkopplungsmöglichkeit, wobei die besagten Entkopplungsvorbereitungsinformationen eine Angabe eines von dem besagten Benutzergerät anzuwendenden Implementierungstriggers umfasst; und Erwarten des Empfangs des besagten Implementierungstriggers, um die besagte Aufwärts-/Abwärtsentkopplung zu implementieren.

2. Verfahren nach Anspruch 1, wobei der besagte Funkbedingungstrigger Folgendes umfasst:
eine Angabe eines empfangenen Grenzwert-Pilotsignals von einer oder mehreren Zellen in dem besagten drahtlosen Telekommunikationsnetzwerk.

3. Verfahren nach Anspruch 1 oder Anspruch 2, wobei die besagten Entkopplungsvorbereitungsinformationen Folgendes umfassen:
Konfigurationsinformationen zur Aufwärts- und Abwärtskommunikation für zumindest eine Zelle, die als Kandidat für eine Aufwärts-/Abwärtsentkopplung identifiziert wurde.

4. Verfahren nach einem der vorhergehenden Ansprüche, wobei der besagte Implementierungstrigger eine explizite Nachricht für den Beginn der Aufwärts-/Abwärtsentkopplung umfasst.

5. Verfahren nach Anspruch 4, wobei die besagte Nachricht von einer Zelle empfangen wird, die als das besagte Benutzergerät dient.

6. Verfahren nach Anspruch 4, wobei die besagte Nachricht von einer nicht als Benutzergerät dienenden Zelle empfangen wird.

7. Verfahren nach einem der vorhergehenden Ansprüche, wobei der besagte Implementierungstrigger Folgendes umfasst: eine Angabe einer zuständigen Zelle, die für jede Aufwärts- und Abwärtskommunikation zu verwenden ist.

8. Verfahren nach einem der vorhergehenden Ansprüche, wobei der besagte Implementierungstrigger Folgendes umfasst: eine Anweisung, eine bestehende Aufwärts-/Abwärtskommunikationskonfiguration in den Zwischenspeicher zu schreiben.

9. Verfahren nach einem der vorhergehenden Ansprüche, umfassend: Löschen der besagten Entkopplungsvorbereitungsinformationen in Bezug auf die besagte Aufwärts-/Abwärtsentkopplungsmöglichkeit, sofern eine Funkkonfigurationsnachricht empfangen wurde.

10. Computerprogramm, das bei Ausführung an einem Computer betreibbar ist, um das Verfahren nach einem der Ansprüche 1 bis 9 durchzuführen.

11. Benutzergerät für ein drahtloses Telekommunikationsnetzwerk, umfassend:
Bestimmungslogik, die betreibbar ist, um einen Funkbedingungstrigger zu bestimmen, der eine Aufwärts-/Abwärtsentkopplungsmöglichkeit anzeigt;
Übertragungslogik, die betreibbar ist, um eine Entkopplungsmöglichkeitsbenachrichtigung zu übertragen, sofern der besagte Funkbedingungstrigger am Benutzergerät erfüllt ist;
Empfangslogik, die betreibbar ist, um Entkopplungsvorbereitungsinformationen in Bezug auf die besagte Aufwärts-/Abwärtsentkopplungsmöglichkeit zu empfangen, wobei die besagten Entkopplungsvorbereitungsinformationen eine Angabe eines von dem besagten Benutzergerät anzuwendenden Implementierungstriggers umfassen; und
Implementierungslogik, die betreibbar ist, um den Empfang des besagten Implementierungstriggers zu erwarten und die besagte Aufwärts-/Abwärtsentkopplung zu implementieren.

12. Kontrollknotenverfahren für ein drahtloses Telekommunikationsnetzwerk, umfassend:
Bestimmen eines Funkbedingungstriggers, der eine Aufwärts-/Abwärtsentkopplungsmöglichkeit anzeigt;
Empfangen einer Entkopplungsmöglichkeitsbenachrichtigung, sofern der besagte Funkbedingungstrigger am Benutzergerät erfüllt ist;
Übertragen von Entkopplungsvorbereitungsinformationen in Bezug auf die besagte Aufwärts-/Abwärtsentkopplungsmöglichkeit, wobei die besagten Entkopplungsvorbereitungsinformationen eine Angabe eines von dem besagten Benutzergerät anzuwendenden Implementierungstriggers umfasst; und Geben einer Anweisung zum Senden des besagten Implementierungstriggers, um die besagte Aufwärts-/Abwärtsentkopplung zu implementieren, sofern festgestellt wurde, dass die Entkopplungsnetzwerkkriterien erfüllt wurden.

13. Computerprogramm, das bei Ausführung an einem Computer betreibbar ist, um das Verfahren nach Anspruch 12 durchzuführen.

14. Steuerknoten für ein drahtloses Telekommunikationsnetzwerk, umfassend:
Bestimmungslogik, die betreibbar ist, um einen Funkbedingungstrigger zu bestimmen, der eine Aufwärts-/Abwärtsentkopplungsmöglichkeit anzeigt;
Empfangslogik, die betreibbar ist, um eine Entkopplungsmöglichkeitsbenachrichtigung zu empfangen, sofern die besagten Entkopplungsnetzwerkkriterien am Benutzergerät erfüllt werden;
Übertragungslogik, die betreibbar ist, um Entkopplungsvorbereitungsinformationen in Bezug auf die besagte Aufwärts-/Abwärtsentkopplungsmöglichkeit zu übertragen, wobei die Entkopplungsvorbereitungsinformationen eine Angabe eines von dem besagten Benutzergerät anzuwendenden Implementierungstriggers umfassen; und
Anweisungslogik, die betreibbar ist, um eine Anweisung zum Senden des besagten Implementierungstriggers zu geben, um die besagte Aufwärts-/Abwärtsentkopplung zu implementieren, sofern festgestellt wurde, dass die Entkopplungsnetzwerkkriterien erfüllt werden.

## Revendications

1. Procédé d'équipement d'utilisateur de réseau de télécommunications sans fil, comprenant les étapes suivantes :
déterminer un déclencheur de condition radio indicatif d'une opportunité de découplage liaison montante-liaison descendante ;
transmettre une notification d'opportunité de découplage si ledit déclencheur de condition radio est rencontré au niveau d'un équipement d'utilisateur ;
recevoir des informations de préparation de découplage relatives à ladite opportunité de découplage liaison montante-liaison descendante, lesdites informations de préparation de découplage comprenant une indication d'un déclencheur de mise en oeuvre à appliquer par ledit équipement d'utilisateur ; et
attendre la réception dudit déclencheur de mise en oeuvre pour mettre en oeuvre ledit découplage de liaison montante-liaison descendante.

2. Procédé selon la revendication 1, dans lequel ledit déclencheur de condition radio comprend : une indication d'un signal pilote reçu de seuil en provenance d'une ou plusieurs cellules dans ledit réseau de télécommunications sans fil.

3. Procédé selon la revendication 1 ou la revendication 2, dans lequel lesdites informations de préparation de découplage comprennent : des informations de configuration de communication de liaison montante et de liaison descendante pour au moins une cellule identifiée comme un candidat pour le découplage liaison montanteliaison descendante.

4. Procédé selon l'une quelconque des revendications précédentes, dans lequel ledit déclencheur de mise en oeuvre comprend un message explicite pour commencer le découplage liaison montante-liaison descendante.

5. Procédé selon la revendication 4, dans lequel ledit message est reçu en provenance d'une cellule desservant ledit équipement d'utilisateur.

6. Procédé selon la revendication 4, dans lequel ledit message est reçu en provenance d'une cellule de non-desserte d'équipement d'utilisateur.

7. Procédé selon l'une quelconque des revendications précédentes, dans lequel ledit déclencheur de mise en oeuvre comprend : une indication d'une cellule de desserte à utiliser pour chacune d'une communication de liaison montante et de liaison descendante.

8. Procédé selon l'une quelconque des revendications précédentes, dans lequel ledit déclencheur de mise en oeuvre comprend : une instruction pour mettre en cache une configuration de communication de liaison montante et de liaison descendante existante.

9. Procédé selon l'une quelconque des revendications précédentes, comprenant :
l'effacement desdites informations de préparation de découplage relatives à ladite opportunité de découplage liaison montante-liaison descendante si un message de reconfiguration radio est reçu.

10. Produit de programme informatique exploitable, lorsqu'il est exécuté sur un ordinateur, pour effectuer le procédé de l'une quelconque des revendications 1 à 9.

11. Equipement d'utilisateur de réseau de télécommunications sans fil, comprenant :
une logique de détermination exploitable pour déterminer un déclencheur de condition radio indicatif d'une opportunité de découplage liaison montante-liaison descendante ;
une logique de transmission exploitable pour transmettre une notification d'opportunité de découplage si ledit déclencheur de condition radio est rencontré au niveau d'un équipement d'utilisateur ;
une logique de réception exploitable pour recevoir des informations de préparation de découplage relatives à ladite opportunité de découplage liaison montante-liaison descendante, lesdites informations de préparation de découplage comprenant une indication d'un déclencheur de mise en oeuvre à appliquer par ledit équipement d'utilisateur ; et
une logique de mise en oeuvre exploitable pour attendre la réception dudit déclencheur de mise en oeuvre et mettre en oeuvre ledit découplage de liaison montante-liaison descendante.

12. Procédé de noeud de contrôle de réseau de télécommunications sans fil, comprenant les étapes suivantes :
déterminer un déclencheur de condition radio indicatif d'une opportunité de découplage liaison montante-liaison descendante ;
recevoir une notification d'opportunité de découplage si ledit déclencheur de condition radio est rencontré au niveau d'un équipement d'utilisateur ;
transmettre des informations de préparation de découplage relatives à ladite opportunité de découplage liaison montante-liaison descendante, lesdites informations de préparation de découplage comprenant une indication d'un déclencheur de mise en oeuvre à appliquer par ledit équipement d'utilisateur ; et
donner pour instruction l'envoi dudit déclencheur de mise en oeuvre pour mettre en oeuvre ledit découplage de liaison montante-liaison descendante s'il est déterminé que des critères de réseau de découplage sont remplis.

13. Produit de programme informatique exploitable, lorsqu'il est exécuté sur un ordinateur, pour effectuer le procédé de la revendication 12.

14. Noeud de contrôle de réseau de télécommunications sans fil, comprenant :
une logique de détermination exploitable pour déterminer un déclencheur de condition radio indicatif d'une opportunité de découplage liaison montante-liaison descendante ;
une logique de réception exploitable pour recevoir une notification d'opportunité de découplage si ledit déclencheur de condition radio est rencontré au niveau d'un équipement d'utilisateur ;
une logique de transmission exploitable pour transmettre des informations de préparation de découplage relatives à ladite opportunité de découplage liaison montante-liaison descendante, lesdites informations de préparation de découplage comprenant une indication d'un déclencheur de mise en oeuvre à appliquer par ledit équipement d'utilisateur ; et
une logique d'instruction exploitable pour donner pour instruction l'envoi dudit déclencheur de mise en oeuvre pour mettre en oeuvre ledit découplage de liaison montante-liaison descendante s'il est déterminé que des critères de réseau de découplage sont remplis.
